# EUROPEAN PATENT SPECIFICATION

(11) **EP 2 695 805 B1**
(45) Date of publication and mention of the grant of the patent: **06.04.2016**
(21) Application number: 13179522.1
(22) Date of filing: 07.08.2013
(51) Int. Cl.: B62M 3/00, B62J 99/00, B62M 6/70

(54) **Pedal pressure sensing mechanism at the crank spindle for electric bicycle**
Pedaldruckmesssensierung an der Trittwelle für ein elektrisches Fahrrad
Capteur de détection de pression de pédale associé à l'axe du pédalier pour bicyclette électrique

(30) Priority: 10.08.2012 TW 101215514
(43) Date of publication of application: 12.02.2014
(73) Proprietor: J.D Components Co., Ltd., Shou Shui Hsiang, Chang Hua Hsien (TW)
(72) Inventor: Hsu, Yuan-Fang, 300 Hsinchu City (TW)
(74) Representative: Becker Kurig Straus

(56) References cited:
- EP-A2- 1 978 342
- WO-A1-2010/132926
- CH-B1- 702 983
- DE-A1- 10 158 600
- DE-A1-102007 046 749
- DE-A1-102009 045 813
- JP-A- 2002 082 003
- US-A1- 2012 285 265

## Description

### BACKGROUND OF THE INVENTION

### 1. Field of the Invention

The present invention relates generally to an electric bicycle and more particularly, to a pedal pressure sensing mechanism for use in an electric bicycle.

### 2. Description of the Related Art

China Patent Publication No. 101279630 discloses an instrument-equipped bicycle component, comprising two detection units attached to a component for detecting the torsional strain of the component and outputting a pedal pressure signal corresponding to the detected torsional strain when the pedal pressure is applied by a cyclist to the component through two pedals. However, the process of transmitting the pedal pressure from the left pedal to the component is different from the process of transmitting the pedal pressure from the right pedal to the component, such that the torsional strain acting on the component can't be detected accurately by the two detection units even though the relative angular and axial positions between the two detection units are changeable, resulting in outputting a non-continuous pedal pressure signal corresponding to the detected torsional strain and reducing the riding quality of the electric bicycle.

Document EP 1 978 342 A2 discloses two detection units for torsional strain and bending strain, vet these are located on two separate bicycle parts crank spindle and arm.

Therefore, it is desirable to provide a pedal pressure sensing mechanism for an electric bicycle that eliminates the aforesaid drawbacks.

### SUMMARY OF THE INVENTION

It is one objective of the present invention to provide a pedal pressure sensing mechanism for an electric bicycle, which accurately detects the pedal pressure applied by a cyclist to a crank spindle and raises the riding quality of the electric bicycle.

To achieve this objective of the present invention, the pedal pressure sensing mechanism is installed in an electric bicycle, comprising a crank spindle, two cranks respectively connected between the crank spindle and one of two pedals of the electric bicycle such that the cranks can be driven by the pedal pressure acting on the pedals to rotate the crank spindle, a chainwheel connected to one of the cranks so as to be rotatable along with the cranks, a first strain gauge attached to the crank spindle for detecting the torsional strain of the crank spindle, and a second strain gauge attached to the crank spindle for detecting the bending strain of the crank spindle.

By this way, the pedal pressure applied by the cyclist to the crank spindle can be detected accurately by measuring the bending strain and torsional strain of the crank spindle, thereby enhancing the riding quality of the electric bicycle.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### BRIEF DESCRIPTION OF THE DRAWINGS

The present invention will become more fully understood from the detailed description given herein below and the accompanying drawings which are given by way of illustration only, and thus are not limitative of the present invention, and wherein:
FIG. 1 is a sectional view of the pedal pressure sensing mechanism according to an embodiment of the present invention.
FIG. 2 is a plane view of a part of the pedal pressure sensing mechanism according to the embodiment of the present invention, showing the position of the second strain gauge.
FIG. 3 is similar to FIG. 2, showing the position of the first strain gauge.
FIG. 4 is a sectional view of a part of the pedal pressure sensing mechanism according to the embodiment of the present invention, shown that the second strain gauge is arranged at 180 degrees to the first strain gauge.
FIG. 5 is similar to FIG. 4, but showing that the second strain gauge is arranged at 90 degrees to the first strain gauge.
FIG. 6 is similar to FIG. 5, but showing that the second strain gauges are arranged at 180 degrees to each other, and the first strain gauge is arranged at 90 degrees to each of the second strain gauges.
FIG. 7 is a block diagram of the pedal pressure sensing mechanism according to the embodiment of the present invention, showing that the pedal pressure is applied by the left foot of the cyclist to the crank spindle.
FIG. 8 is another block diagram of the pedal pressure sensing mechanism according to the embodiment of the present invention, showing that the pedal pressure is applied by the right foot of the cyclist to the crank spindle.

### DETAILED DESCRIPTION OF THE INVENTION

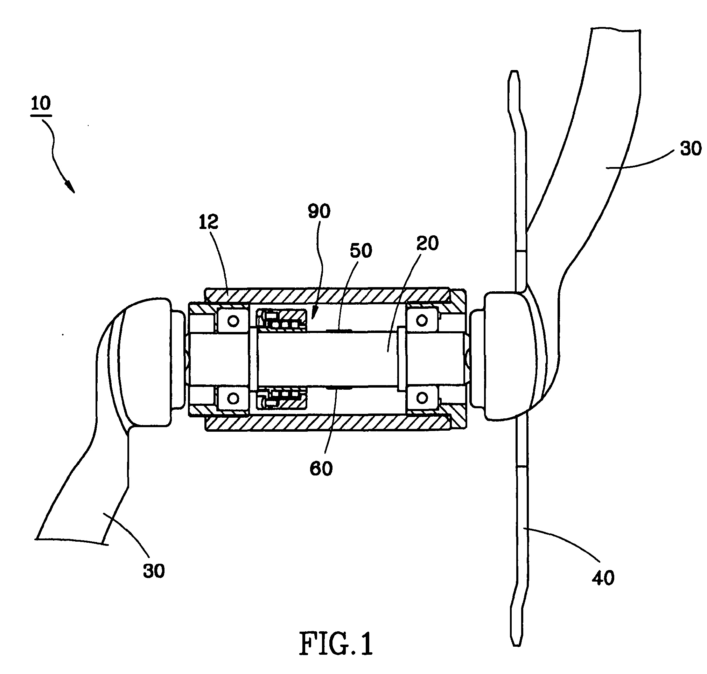

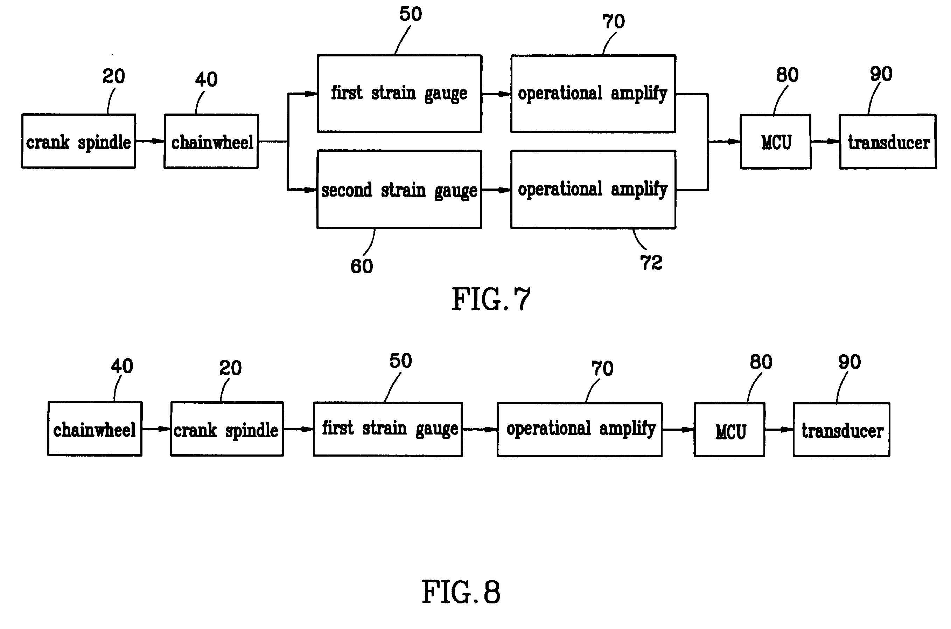

As shown in FIGS. 1 and 7, a pedal pressure sensing mechanism 10 is installed in an electric bicycle (not shown), comprising a crank spindle 20, two cranks 30, a chainwheel 40, a first strain gauge 60, a second strain gauge 50, two operational amplifiers 70 and 72, a microcontroller unit (MCU) 80, and a transducer 90.

The crank spindle 20 is rotatably mounted in a bottom bracket 12 of the electric bicycle.

Each of the cranks 30 is connected between one end of the crank spindle 20 and one of two pedals (not shown) of the electric bicycle, such that the crank spindle 20 can be driven by the cranks 30 to rotate in the bottom bracket 12 when the pedal pressure is applied by a cyclist to the two pedals.

The chainwheel 40 is mounted with one of the cranks 30 so as to be rotatable along with the cranks 30.

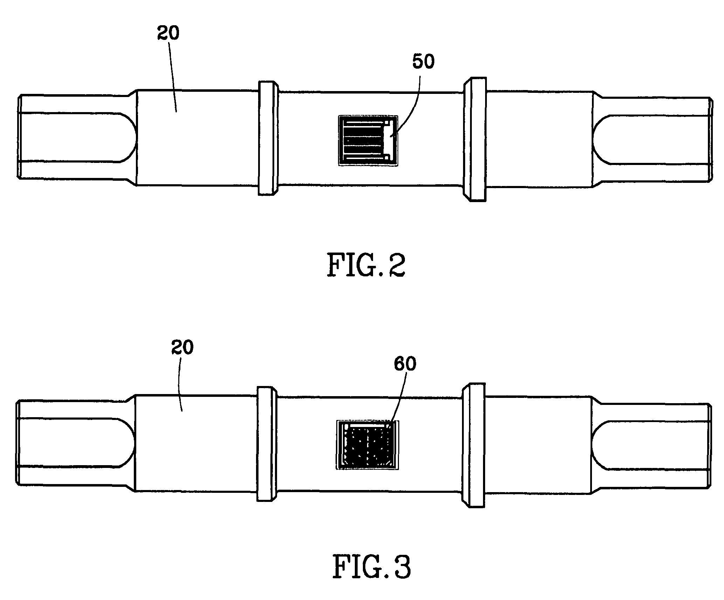

The second strain gauge 50 is attached to the center of the crank spindle 20 and has a sensitive orientation parallel to an axial direction of the crank spindle 20 (as shown in FIG. 2) for detecting the bending strain of the crank spindle 20 and outputting a bending strain signal corresponding to the detected bending strain.

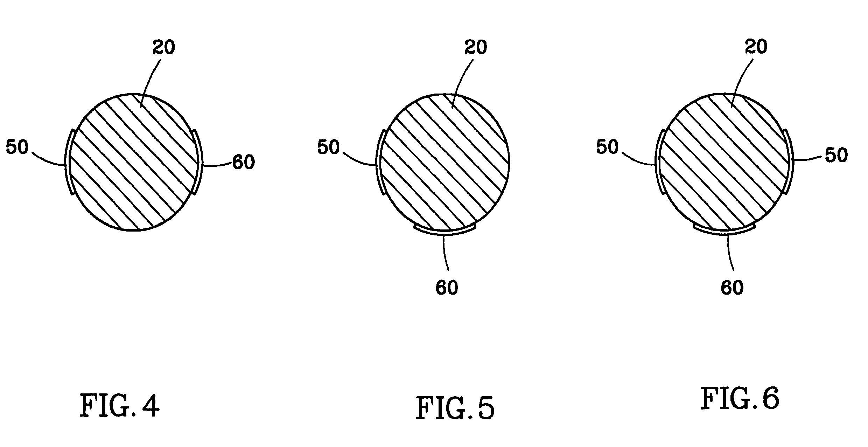

The first strain gauge 60 is attached to the center of the crank spindle 20 and has a sensitive orientation defining a contained angle of 45 degrees with the axial direction of the crank spindle 20 (as shown in FIG. 3) for detecting the torsional strain of the crank spindle 20 and outputting a torsional strain signal corresponding to the detected torsional strain. Further, the first strain gauge 60 is arranged at 180 degrees to the second strain gauge 50 in this embodiment, as shown in FIG. 4.

The operational amplifiers 70 and 72 are disposed on the crank spindle 20. As shown in FIG.7, the operational amplifier 70 is electrically connected to the second strain gauge 50 for amplifying the bending strain signal generated by the second strain gauge 50, and the operational amplifier 72 is electrically connected to the first strain gauge 60 for amplifying the torsional strain signal generated by the first strain gauge 60.

The microcontroller unit 80 is disposed on the crank spindle 20. As shown in FIGS. 7 and 8, the microcontroller unit 80 is electrically connected to the operational amplifiers 70 and 72 for receiving the amplified bending and torsional strain signals from the operational amplifiers 70 and 72 and processing the amplified bending and torsional strain signals into a left or right pedal pressure signal.

The transducer 90 is mounted on the crank spindle 20 and electrically connected to the microcontroller unit 80, as shown in FIGS. 1, 7 and 8, for receiving and then outwardly transmitting the pedal pressure signals from the microcontroller unit 80. Further, the transducer 90 can be, but not limited to, a resolver or conducting ring. Since the resolver or conducting ring is a well-known device, the principle of operation of the transducer 90 will not be described hereafter for concise illustration of the present invention.

When the pedal pressure is applied by the left foot of the cyclist to the crank spindle 20 through the left pedal, as shown in FIG. 7, the left pedal pressure is transmitted to the chainwheel 40 through the crank spindle 20 such that a rear wheel (not shown) is driven by the chainwheel 40 to rotate through a chain (not shown) running between the rear wheel and the chainwheel 40. At this time, the left pedal pressure exerts a bending moment on the crank spindle 20 to cause a bending deformation of the crank spindle 20, which is detected by the second strain gauge 50 and converted by the second strain gauge 50 into the bending strain signal; meanwhile, the left pedal pressure and a pulling force generated by the chain exert a torsional moment on the crank spindle 20 to cause a torsional deformation of the crank spindle 20, which is detected by the first strain gauge 60 and converted by the first strain gauge 60 into the torsional strain signal. Thereafter, the bending and torsional strain signals are respectively amplified by the two operational amplifiers 70 and 72 and processed by the microcontroller unit 80 into the left pedal pressure signal. As a result, the left pedal pressure signal is sent by the microcontroller unit 80 to the transducer 90 for calculating the left pedal pressure applied to the crank spindle 20.

Further, when the pedal pressure is applied by the right foot of the cyclist to the crank spindle 20 through the right pedal, as shown in FIG. 8, the right pedal pressure is conveyed directly to the chainwheel 40 and exerts a bending moment on the crank spindle 20 to cause a bending deformation of the crank spindle 20. At this time, the bending strain of the crank spindle 20 is detected by the second strain gauge 50 and converted by the second strain gauge 50 into a bending strain signal, and then the bending strain signal is amplified by the operational amplify 70 and processed by the microcontroller unit 80 into a right pedal pressure signal. Accordingly, the right pedal pressure signal is sent by the microcontroller unit 80 to the transducer 90 for calculating the right pedal pressure applied to the crank spindle 20.

To deserve to be mentioned, the positions of the first and second strain gauges 60 and 50 are changeable. For example, as shown in FIG. 5, the first and second strain gauges 60 and 50 can be arranged at 90 degrees to each other. Preferably, the pedal pressure sensing mechanism 10 of the present invention can be equipped with two second strain gauges 50. The two second strain gauges 50 are arranged at 180 degrees to each other, and the first strain gauge 60 is arranged at 90 degrees to each of the two second strain gauges 50, as shown in FIG. 6, thereby detecting the maximum value of the strain.

In conclusion, the present invention uses two strain gauges 60 and 50 to measure the bending strain and torsional strain of the crank spindle 20 respectively such that the left and right pedal pressure applied to the crank spindle 20 can be accurately detected and the left and right pedal pressure signals can be outputted continuously, thereby enhancing riding quality of the electric bicycle.

## Claims

1. A pedal pressure sensing mechanism (10) for an electric bicycle, comprising:
a crank spindle (20);
two cranks (30) coupled to two ends of the crank spindle (20);
a chainwheel (40) mounted to one of the cranks (30) so as to be rotatable along with the cranks (30);
the pedal pressure sensing mechanism (10) being **characterized in that** it comprises:
a first strain gauge (60) attached to the crank spindle (20) for detecting torsional strain of the crank spindle (20); **characterized in that** the pedal pressure sensing mechanism (10) further comprises
a second strain gauge (50) attached to the crank spindle (20) for detecting bending strain of the crank spindle (20).

2. The pedal pressure sensing mechanism (10) as claimed in claim 1, which is **characterized in that** the first and second strain gauges (60)(50) are located at a center of the crank spindle (20) and spacedly arranged at 180 degrees to each other.

3. The pedal pressure sensing mechanism (10) as claimed in claim 1, which is **characterized in that** the first and second strain gauges (60)(50) are located at a center of the crank spindle (20) and spacedly arranged at 90 degrees to each other.

4. The pedal pressure sensing mechanism (10) as claimed in claim 1, which is **characterized in that** the number of the second strain gauge (50) is two, and the two second strain gauges (50) are located at a center of the crank spindle (20) and spacedly arranged at 180 degrees to each other, and the first strain gauge (60) is located at the center of the crank spindle (20) and spacedly arranged at 90 degrees to each of the two second strain gauges (50).

5. The pedal pressure sensing mechanism (10) as claimed in claim 1, which is **characterized in that** the second strain gauge (50) has a sensitive orientation parallel to an axial direction of the crank spindle (20).

6. The pedal pressure sensing mechanism (10) as claimed in claim 1, which is **characterized in that** the first strain gauge (60) has a sensitive orientation defining a contained angle of 45 degrees with an axial direction of the crank spindle (20).

7. The pedal pressure sensing mechanism (10) as claimed in claim 1, which is **characterized in that** the pedal pressure sensing mechanism (10) further comprises two operational amplifiers (70)(72), one of which is electrically connected to the second strain gauge (50) for amplifying a bending strain signal generated by the second strain gauge (50), and the other of which is electrically connected to the first strain gauge (60) for amplifying a torsional strain signal generated by the first strain gauge (60).

8. The pedal pressure sensing mechanism (10) as claimed in claim 7, which is **characterized in that** the pedal pressure sensing mechanism (10) further comprises a microcontroller unit (80) electrically connected to the two operational amplifiers (70)(72) for receiving the amplified signals from the two operational amplifiers (70)(72) and converting the amplified signals into pedal pressure signals.

9. The pedal pressure sensing mechanism (10) as claimed in claim 8, which is **characterized in that** the pedal pressure sensing mechanism (10) further comprises a transducer (90) electrically connected to the microcontroller unit (80) for receiving and then outwardly transmitting the pedal pressure signals from the microcontroller unit (80).

10. The pedal pressure sensing mechanism (10) as claimed in claim 9, which is **characterized in that** the transducer (90) is a resolver or conducting ring.

## Patentansprüche

1. Pedaldruckmesssensierung (10) für ein elektrisches Fahrrad, umfassend:
Eine Trittwelle (20),
zwei Tretkurbelarme (30), die an die zwei Enden der Trittwelle (20) gekoppelt vorlieben.
ein Kettenrad (40), das an einer der Tretkurbelarme (30) befestigt vorliegt, um zusammen mit den Tretkurbelarmen (30) gedreht zu werden,
wobei die Pedaldruckmesssensierung (10) umfasst:
Einen ersten Dehnungsmesser (60), der an der Trittwelle (20) angeordnet vorliegt, um Verdrehspannungen der Trittwelle (20) zu erfassen,
**dadurch gekennzeichnet, dass** sie ferner einen zweiten Dehnungsmesser (50) umlasst, der an der Trittwelle (20) zum Erfassen einer Biegevertormung der Trittwelle (20).

2. Pedaldruckmesssensierung (10) nach Anspruch 1, **dadurch gekennzeichnet, dass** sich der erste und zweite Dehnungsmesser (60, 50) an einer Mitte der Trittwelle (20) befinden und voneinander beabstandet im Winkel von 180° zueinander angeordnet sind.

3. Pedaldruckmesssensierung (10) nach Anspruch 1, **dadurch gekennzeichnet, dass** sich der erste und zweite Dehnungsmesser (60, 50) an einer Mitte der Trittwelle (20) befinden und voneinander beabstandet im Winkel von 90° zueinander angeordnet sind.

4. Pedaldruckmesssensierung (10) nach Anspruch 1, **dadurch gekennzeichnet, dass** die Anzahl des zweiten Dehnungsmessers (50) zwei beträgt und sich die zwei zweiten Dehnungsmesser (50) an einer Mitte der Trittwelle (20) befinden und voneinander beabstandet im Winkel von 180° zueinander angeordnet sind, und dass sich der erste Dehnungsmesser (60) an der Mitte der Trittwelle (20) befindet und im Winkel von 90° zu jedem der zwei zweiten Dehnungsmesser (50) angeordnet ist.

5. Pedaldruckmesssensierung (10) nach Anspruch 1, **dadurch gekennzeichnet, dass** der zweite Dehnungsmesser (50) eine Erfassungsausrichtung aufweist, die parallel zu einer Achsausrichtung der Trittwelle (20) liegt.

6. Pedaldruckmesssensierung (10) nach Anspruch 1, **dadurch gekennzeichnet, dass** der erste Dehnungsmesser (60) eine Erfassungsausrichtung aufweiset, die einen eingeschlossenen Winkel von 45° zu einer Achsausrichtung der Trittwelle (20) aufweist.

7. Pedaldruckmesssensierung (10) nach Anspruch 1, **dadurch gekennzeichnet, dass** die Pedaldruckmesssensierung (10) ferner zwei Betriebsverstärker (70, 72) umfasst, von denen einer elektrisch mit dem zweiten Dehnungsmesser (50) verbunden ist, um ein durch den zweiten Dehnungsmesser (50) erzeugtes Biegesignal zu verstärken, und der andere mit dem ersten Dehnungsmesser (60) elektrisch verbunden ist, um ein durch den ersten Dehnungsmesser (60) erzeugtes Verdrehspannungssignal zu verstärken.

8. Pedaldruckmesssensierung (10) nach Anspruch 7, **dadurch gekennzeichnet, dass** die Pedaldruckmesssensierung (10) ferner eine Mikrosteuereinheit (80) umfasst, die mit den zwei Betriebsverstärkern (70, 72) elektrisch verbunden ist, um die verstärkten Signale von den zwei Betriebsverstärkern (70, 72) zu erhalten und die verstärkten Signale in Pedaldrucksignale umzuwandeln.

9. Pedaldruckmesssensierung (10) nach Anspruch 8, **dadurch gekennzeichnet, dass** die Pedaldruckmesssensierung (10) ferner einen Signalwandler (90) umfasst, der mit der Mikrosteuereinheit (80) elektrisch verbunden ist, um die Pedaldrucksignale von der Mikrosteuereinheit (80) zu erhalten und dann nach außen zu übertragen.

10. Pedaldruckmesssensierung (10) nach Anspruch 9, **dadurch gekennzeichnet, dass** der Signalwandler (90) ein Koordinatenwandler oder ein leitender Ring ist.

## Revendications

1. Mécanisme de détection de pression de pédale (10) pour une bicyclette électrique, comprenant :
un essieu de pédalier (20) ;
deux manivelles (30) couplées à deux extrémités de l'essieu de pédalier (20) :
un plateau de pédalier (40) monté sur une des manivelles (30) de façon à pouvoir tourner en même temps que les manivelles (30) ;
le mécanisme de détection de pression de pédale (10) comprenant
une première jauge de contrainte (60) fixée à l'essieu de pédalier (20) pour détecter la contrainte de torsion de l'essieu de pédalier (20) ;
et **caractérisé en ce qu'**il comprend en outre une seconde jauge de contrainte (50) fixée à l'essieu de pédalier (20) pour détecter la contrainte de flexion de l'essieu de pédalier (20).

2. Mécanisme de détection de pression de pédale (10) selon la revendication 1. qui est **caractérisé en ce que** les première et seconde jauges de contrainte (60)(50) sont situées au niveau d'un centre de l'essieu de pédalier (20) et disposées de façon espacée à 180 degrés l'une par rapport à l'autre.

3. Mécanisme de détection de pression de pédale (10) selon la revendication 1, qui est **caractérisé en ce que** les première et seconde jauges de contrainte (60)(50) sont situées au niveau d'un centre de l'essieu de pédalier (20) et disposées de façon espacée à 90 degrés l'une par rapport à l'autre.

4. Mécanisme de détection de pression de pédale (10) selon la revendication 1. qui est **caractérisé en ce que** la seconde jauge de contrainte (50) est au nombre de deux, et les deux secondes jauges de contrainte (50) sont situées à un centre de l'essieu de pédalier (20) et disposées de façon espacée à 180 degrés l'une par rapport à l'autre, et la première jauge de contrainte (60) est située au centre de l'essieu de pédalier (20) et disposée de façon espacée à 90 degrés par rapport à chacune des deux secondes jauges de contrainte (50).

5. Mécanisme de détection de pression de pédale (10) selon la revendication 1, qui est **caractérisé en ce que** la seconde jauge de contrainte (50) possède une orientation sensible parallèle à une direction axiale de l'essieu de pédalier (20).

6. Mécanisme de détection de pression de pédale (10) selon la revendication 1, qui est **caractérisé en ce que** la première jauge de contrainte (60) possède une orientation sensible définissant un angle contenu de 45 degrés avec une direction axiale de l'essieu de pédalier (20).

7. Mécanisme de détection de pression de pédale (10) selon la revendication 1, qui est **caractérisé en ce que** le mécanisme de détection de pression de pédale (10) comprend en outre deux amplificateurs opérationnels (70)(72), dont un est connecté électriquement à la seconde jauge de contrainte (50) pour amplifier un signal de contrainte de flexion généré par la seconde jauge de contrainte (50), et dont l'autre est connecté électriquement à la première jauge de contrainte (60) pour amplifier un signal de contrainte de torsion généré par la première jauge de contrainte (60).

8. Mécanisme de détection de pression de pédale (10) selon la revendication 7. qui est **caractérisé en ce que** le mécanisme de détection de pression de pédale (10) comprend en outre une unité de microcontrôleur (80) connectée électriquement aux deux amplificateurs opérationnels (70)(72) pour recevoir les signaux amplifiés des deux amplificateurs opérationnels (70)(72) et convertir les signaux amplifiés en signaux de pression de pédale.

9. Mécanisme de détection de pression de pédale (10) selon la revendication 8, qui est **caractérisé en ce que** le mécanisme de détection de pression de pédale (10) comprend en outre un transducteur (90) connecté électriquement à l'unité de microcontrôleur (80) pour recevoir puis transmettre vers l'extérieur les signaux de pression de pédale à partir de l'unité de microcontrôleur (80).

10. Mécanisme de détection de pression de pédale (10) selon la revendication 9, qui est **caractérisé en ce que** le transducteur (90) est un résolveur ou un anneau conducteur.
